# EUROPÄISCHE PATENTANMELDUNG

(11) **EP 3 900 826 A1**
(43) Veröffentlichungstag der Anmeldung: **27.10.2021**
(21) Anmeldenummer: 20170800.5
(22) Anmeldetag: 22.04.2020
(51) Int. Cl.: B01J 23/46, B01J 35/00, B01J 35/06, C01B 21/26

(54) **EDELMETALLNETZ FUER DIE KATALYSIERUNG VON GASPHASENREAKTIONEN**

(71) Anmelder: UMICORE AG & Co. KG, 63457 Hanau-Wolfgang (DE)
(72) Erfinder: BORN, Dirk, 63505 Langenselbold (DE); WISER, Artur, 60486 Frankfurt (DE); ZEUNER, Stefan, 61352 Bad Homburg v.d.H. (DE)

(57) **Zusammenfassung**

Draht aus Platingruppenmetallen für die Herstellung von Netzkatalysatoren umfassend Platin und Rhodium, dadurch gekennzeichnet, dass der Draht als Manteldraht aufgebaut ist und aus einem Kern und einem oder mehreren vom Kern aus radialsymmetrisch übereinander angeordneten Mänteln besteht und die Rhodiumkonzentration im äußersten Mantel niedriger ist als die im direkt darunter angeordneten Mantel oder Kern.

## Beschreibung

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology ;Wiley-VCH Verlag, Weinheim 2013, Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2) oder Gestricken (EP0364153 B1, DE4206199 C1) aus feinen Edelmetalldrähten durchgesetzt.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise mehrere Netze hintereinander angeordnet und zu einem Katalysatornetzstapel zusammengefasst.

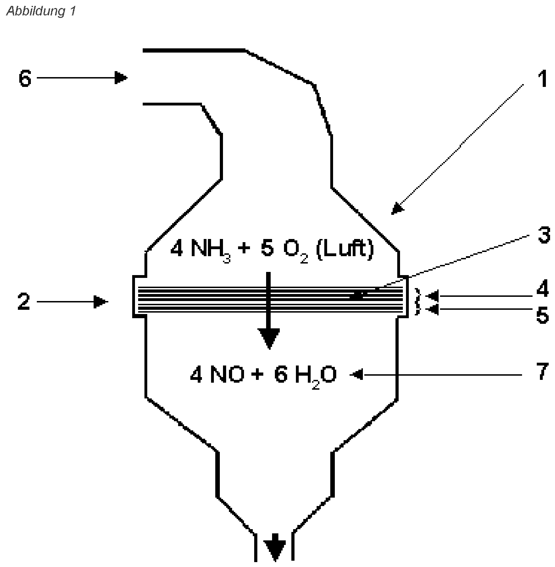

Abbildung 1 zeigt am Beispiel der katalytischen Ammoniakoxidation (Ostwald-Verfahren) schematisch den Reaktor mit dem darin verbauten Netzstapel, dessen Funktion im Folgenden beschrieben wird:
In der Reaktionszone (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel wird durch Einklemmen in seiner Position gehalten.

Das Reaktionsgas (Ammoniak-Luftsauerstoffgemisch mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone (2) erfasst:

4NH₃+5O₂(Luft) → 4NO+6H₂O

Unerwünschte Nebenreaktionen sind die Oxidation des Ammoniaks zu Stickstoff und Lachgas (N₂O).

Das NO im abströmenden Reaktionsgasgemisch reagiert in der Folge mit dem überschüssigen Luftsauerstoff zu NO₂:

2NO+O₂ → 2NO₂

Eine unerwünschte Nebenreaktion hierbei ist die Bildung von Lachgas:

2NO+½O₂ → 2N₂O

Das NO₂ reagiert wiederum in einer nachgeschalteten Absorption mit Wasser zu Salpetersäure, welche etwa der Düngemittelproduktion zugeführt wird:

3NO₂+H₂O → 2HNO₃+NO

Für die Herstellung der Netze werden derzeit homogene Edelmetalldrähte aus Platin, Rhodium oder aus Legierungen dieser Metalle mit anderen Edel- oder Unedelmetallen verwendet. Typisch sind hierbei Platin-Rhodium- oder Platin-Palladium-Rhodium-Legierungen mit 88 bis 97 Gew.-% Platin. Platin ist erforderlich, um einen möglichst hohen Ammoniak-Umsatz zu erzielen, Rhodium verbessert die Selektivität zu NO, reduziert dadurch die Emission von Lachgas, und erhöht die mechanische Festigkeit [G. R. Maxwell: "Synthetic Nitrogen Products - A Practical Guide to the Products and Processes", Springer Science + Business Media, Inc. 2005, Seite 220]. Palladium wiederum wird verwendet, um, abhängig von den Edelmetallpreisen, die Edelmetallkosten durch Ersatz von Platin zu senken.

Während der ersten Betriebsstunden findet eine Restrukturierung der Oberfläche statt; der Katalysator wird 'aktiviert'. Insbesondere bilden sich Risse und eine Blumenkohl-ähnliche Struktur, die aufgrund der hohen Oberfläche auch die Aktivität erhöhen [Oliver Henkes: "Contaminants and their effect on catalytic gauze performance in nitric acid plants", Nitrogen+Syngas 2019 International Conference & Exhibition (Berlin 4-7. März 2019].

Rhodium an der Drahtoberfläche oxidiert zu Rhodiumoxid, weiteres Rhodium diffundiert aus dem Inneren des Drahtes nach. Das Rhodiumoxid bildet zum Teil nadelförmige Strukturen, die die Selektivität des Katalysators zu NO₂ senken und damit zu höherer Lachgasbildung führen. Des Weiteren behindern die Nadeln die Ausbildung der Blumenkohl-ähnlichen Oberfläche [D2] und senken somit die Aktivität des Katalysators. Unterhalb einer bestimmten Temperatur ist Rhodiumoxid thermodynamisch stabil [D1]. Aus diesem Grund wird der Reaktor möglichst rasch über die Mindestbetriebstemperatur Tₘᵢₙ aufgeheizt, bei der Rhodiumoxid thermodynamisch nicht mehr stabil ist. Die während des Hochfahrens sich gebildeten Rhodiumoxidnadeln an der Drahtoberfläche zersetzen sich jedoch auch bei hohen Temperaturen nur sehr langsam.

Tₘᵢₙ ist abhängig von dem Sauerstoffpartialdruck und der Rhodiumkonzentration. Je höher der Sauerstoffpartialdruck und die Rhodiumkonzentration, desto höher ist Tₘᵢₙ. Deshalb muss bei höheren Rhodiumkonzentrationen die Reaktortemperatur ebenfalls erhöht werden. Dies wiederum erhöht den Edelmetallabtrag der Platinnetze; eine Erhöhung der Reaktortemperatur von 820°C auf 920°C bedingt eine Verzehnfachung des Edelmetallabtrags [Franz Sperner, Wolfgang Hohmann: "Rhodium-Platinum Gauzes for Ammonia Oxidation", Platinum Metals Review (1976) 20 (1) 12-20].

Aus obigen Gründen ist unterhalb von Tₘᵢₙ ein niedriger Rhodiumgehalt in der Oberfläche wünschenswert, um die Bildung von Rhodiumnadeln zu minimieren. Oberhalb von Tₘᵢₙ wiederum ist eine höhere Rhodiumkonzentration von ca. 5 bis 10 Gew.-% wünschenswert, da in diesem Bereich das Rhodiumoxid thermodynamisch instabil ist, und um die Selektivität zu NO zu erhöhen.

Da zudem Rhodium höheren Preisschwankungen als Platin unterliegt und meist deutlich teurer ist, stellt die Rhodiumkonzentration des Drahtes ein Kompromiss dar.

Aufgabe der vorliegenden Erfindung ist deshalb, einen Draht für die Netzkatalysatorfertigung bereitzustellen, der eine minimierte Rhodiumanreicherung und Rhodiumnadelbildung an der Oberfläche während der Aufheizphase aufweist und eine gute Aktivität und Selektivität zur Ammoniakoxidation oberhalb von Tₘᵢₙ bietet. Zudem sollen die Edelmetallkosten möglichst gering gehalten werden.

Die Aufgabe wird gelöst durch einen Draht aus Platingruppenmetallen für die Herstellung von Netzkatalysatoren, Platin und Rhodium umfassend, dadurch gekennzeichnet, dass der Draht als Manteldraht aufgebaut ist und aus einem Kern und einem Mantel oder mehreren vom Kern aus radialsymmetrisch übereinander angeordneten Mänteln besteht und die Rhodiumkonzentration im äußersten Mantel niedriger ist als die im direkt darunter angeordneten Mantel oder Kern.

Durch die geringere Konzentration an Rhodium im äußersten Mantel dieses Drahtaufbaus wird während der Anfahrphase des Reaktors die Rhodiumnadelbildung und die Rhodiumkonzentration in der Drahtoberfläche reduziert. Durch Diffusion von Rhodium aus dem darunter angeordneten Mantel oder Kern wird dann die notwendige Rhodiumkonzentration in der Oberfläche des Drahtes erreicht. Aus diesem Grund ist es wichtig, dass der äußerste Mantel nicht zu dick ist. Deshalb findet eine Manteldicke von weniger als 10 µm, bevorzugt von weniger als 5 µm und eine Mindestdicke von 1 µm Verwendung. Der Draht hat insgesamt einen Gesamtdurchmesser von 50 µm bis 150 µm.

Bevorzugt ist die Rhodiumkonzentration im äußersten Mantel weniger oder gleich 3 Gew.-%, mehr bevorzugt 1 bis 3 Gew.-% und die Rhodiumkonzentration im darunter angeordneten Mantel oder Kern im Bereich von 5 bis 20 Gew.-%, bevorzugt im Bereich von 8 bis 12 Gew.-%.

Wie oben bereits erwähnt ist die Dicke des äußersten Mantels 1 µm bis 10 µm, bevorzugt 1 µm bis 5 µm.

Im einfachsten Fall kann der Draht auch nur aus einem Kern und einem Mantel bestehen. Dies hat den Vorteil einer einfacheren Herstellung. Allerdings muss in dem Fall der gesamte Kern Rhodium enthalten, was die Edelmetallkosten je nach Marktpreis des Rhodiums signifikant erhöhen kann.

Aus Kostengründen weist eine bevorzugte Variante einen Kern und zwei oder mehr Mäntel auf, wobei der Kern zu mindestens 92 Gew.-%, bevorzugt zu mindestens 97 Gew.-% aus Platin und / oder Palladium besteht. Diese Reduzierung des Rhodiumgehalts des Kerns ist möglich, da das Rhodium, welches in den äußersten Mantel diffundieren muss, durch den Mantel, der direkt unterhalb des äußersten Mantels angeordnet ist, bereitgestellt wird. Ein geringer Anteil an Rhodium im Kern, bevorzugt weniger oder gleich 3 Gew.-%, kann verwendet werden, um die Verarbeitbarkeit zu verbessern.

Dieser Draht wird für die Herstellung von Netzkatalysatoren verwendet. Dies kann durch Weben, Wirken oder Stricken erfolgen. Bevorzugt erfolgt die Netzkatalysatorherstellung über Stricken.

Das bevorzugte Verfahren zur Herstellung eines erfindungsgemäßen Netzkatalysators beinhaltet die folgenden Schritte in folgender Reihenfolge:
a. Bereitstellen von einem Bolzen, Platin und / oder Palladium umfassend,
b. Bereitstellen von einem Rohr oder mehreren Rohren, Platin und Rhodium umfassend, wobei der Innendurchmesser des dünnsten Rohres so gewählt ist, dass das dünnste Rohr bündig über den Bolzens geschoben werden kann, sowie die Durchmesser der weiteren Rohre so gewählt sind, dass sie bündig übereinander geschoben werden können und das äußerste Rohr eine geringere Rhodiumkonzentration aufweist als der darunter angeordnete Mantel oder Kern
   Als 'bündig' soll in dieser Erfindung gelten, dass der Innendurchmesser des äußeren Rohres gleich oder um eine gewählte Toleranz größer ist als der Außendurchmesser des Bolzens oder Rohres, über den das äußere Rohr geschoben werden soll. Eine übliche Toleranz sind in diesem Fall 1 bis 10 mm.
c. Übereinanderschieben der Rohre und des Bolzens, beginnend mit dem Schieben des dünnsten Rohres über den Bolzen, wonach die Rohre nacheinander mit steigendem Durchmesser aufgeschoben werden, und Verbinden des Bolzens mit dem Rohr oder den Rohren, zum Beispiel auf dem Rohrzug, wodurch ein Rohling entsteht
d. Glühen und anschließendes kaltes Walzen des Rohlings; dieser Schritt kann mehrmals wiederholt werden
e. Drahtziehen des Rohlings bis zur gewünschten Drahtstärke
f. Stricken des Katalysatornetzes aus dem Draht

Weiterhin ist ein Verfahren zur Oxidation von Ammoniak Teil der Erfindung, bei welchem ein oder mehrere erfindungsgemäße Katalysatornetze angewendet werden.

### Beispiel

Es wird ein Bolzen aus Platin mit einem Durchmesser von 8 mm gefertigt. Ein erstes Rohr mit einem Innendurchmesser von 10 mm und einem Außendurchmesser von 14 mm, bestehend aus einer Platin-Rhodium-Legierung aus 90 Gew.-% Platin und 10 Gew.-% Rhodium wird 30 min bei 1000°C geglüht und nach Abkühlen über den Bolzen geschoben und auf einen Außendurchmesser von 12 mm gezogen (Stange A). Ein zweites Rohr mit einem Innendurchmesser von 18 mm und einem Außendurchmesser von 22 mm, bestehend aus einer Platin-Rhodium-Legierung aus 90 Gew.-% Platin und 10 Gew.-% Rhodium wird 30 min bei 1000°C geglüht und nach Abkühlen über Stange A geschoben (Stange B). Hierüber wird wiederum ein drittes Rohr mit einem Innendurchmesser von 21 mm und einem Außendurchmesser von 22,5 mm, bestehend aus einer Platin-Rhodium-Legierung aus 97 Gew.-% Platin und 3 Gew.-% Rhodium, über Stange B geschoben und auf einen Außendurchmesser von 17,5 mm gezogen. Der auf diese Art erhaltene Rohling wird erst für 30 min bei 1000°C geglüht und anschließend kalt auf einen Außendurchmesser von 9,5 mm gewalzt und nachfolgend für 10 h bei 1150°C geglüht. Anschließend wird der Rohling weiter bis zu einem Außendurchmesser von 1,5 mm gewalzt und danach auf der Drahtziehmaschine zu einem Draht von 76 µm Durchmesser gezogen. Der so erhaltene Draht weist eine Dicke des äußersten Mantels von ca. 3 µm auf, der mittlere Mantel, bestehend aus dem Material des ersten und zweiten Rohres, hat eine Dicke von ca. 10 µm. Das Katalysatornetz wird durch Stricken aus dem so erhaltenen Draht erhalten.

### Vergleichsbeispiel

Es wird ein Bolzen aus einer Platin-Rhodium-Legierung aus 95 Gew.-% Platin und 5 Gew.-% Rhodium mit einem Durchmesser von 32 mm gefertigt. Dieser Rohling wird erst für 30 min bei 1000 °C geglüht und anschließend kalt gewalzt. Dieser Vorgang wird noch 2x wiederholt. Danach wird der Rohling auf der Drahtziehmaschine zu einem Draht von 76 µm Durchmesser gezogen. Das Katalysatornetz wird durch Stricken aus dem so erhaltenen Draht erhalten.

Das Beispiel weist an der Oberfläche lediglich eine Rhodiumkonzentration von 3 Gew.-% auf, was die Bildung von Rhodiumoxidnadeln beim Aufheizen im Vergleich zum Vergleichsbeispiel mit 5 Gew.-% Rhodium deutlich reduziert. Nach kurzer Laufzeit oberhalb der Mindestbetriebstemperatur Tₘᵢₙ erhöht sich die Rhodiumkonzentration durch Diffusion von Rhodium aus dem unteren Mantel auf über 5 Gew.-% Rhodium in der Oberfläche, was die Selektivität des Katalysatornetzes signifikant erhöht. Dabei besteht das Beispiel nur zu 2,59 Gew.-% aus Rhodium und benötigt damit weniger Rhodium als das Vergleichsbeispiel mit 5 Gew.% Rhodium.

## Patentansprüche

1. Draht aus Platingruppenmetallen für die Herstellung von Netzkatalysatoren umfassend Platin und Rhodium, **dadurch gekennzeichnet, dass** der Draht als Manteldraht aufgebaut ist und aus einem Kern und einem oder mehreren vom Kern aus radialsymmetrisch übereinander angeordneten Mänteln besteht und die Rhodiumkonzentration im äußersten Mantel niedriger ist als die im direkt darunter angeordneten
• Kern, falls der Manteldraht nur aus einem Kern und einem Mantel besteht, oder
• Mantel, falls der Manteldraht aus einem Kern und zwei oder mehr Mänteln besteht.

2. Draht entsprechend Anspruch 1, **dadurch gekennzeichnet, dass** die Rhodiumkonzentration im äußersten Mantel weniger oder gleich 3 Gew.-% ist und die Rhodiumkonzentration im darunter angeordneten Mantel oder Kern im Bereich von 5 bis 20 Gew.-%, bevorzugt im Bereich von 8 bis 12 Gew.-% ist.

3. Draht entsprechend Anspruch 1 und/oder 2, **dadurch gekennzeichnet, dass** die Rhodiumkonzentration im äußersten Mantel 1 bis 3 Gew.-% ist.

4. Draht entsprechend einem oder mehreren der Ansprüche 1 bis 3, **dadurch gekennzeichnet, dass** die Dicke des äußersten Mantels 1 µm bis 10 µm, bevorzugt 1 µm bis 5 µm, beträgt.

5. Draht entsprechend einem oder mehreren den Ansprüche 1 bis 4, **dadurch gekennzeichnet, dass** der Draht aus einem Kern und einem Mantel besteht.

6. Draht entsprechend einem oder mehreren der Ansprüche 1 bis 4, **dadurch gekennzeichnet, dass** der Manteldraht aus einem Kern und zwei oder mehreren vom Kern aus radialsymmetrisch übereinander angeordneten Mänteln besteht, und der Kern zu mindestens 92 Gew.-%, bevorzugt zu mindestens 97 Gew.-% aus Platin und / oder Palladium besteht.

7. Netzkatalysator für die Katalysierung von Gasphasenreaktionen, **dadurch gekennzeichnet, dass** der Netzkatalysator ein Geflecht umfasst, welches einen Draht gemäß einem oder mehreren der Ansprüche 1 bis 6 enthält.

8. Netzkatalysator entsprechend Anspruch 7, **dadurch gekennzeichnet, dass** das Geflecht des Netzkatalysators gestrickt ist.

9. Verfahren zur Herstellung eines Netzkatalysators nach Anspruch 7 und / oder 8, **gekennzeichnet durch** die Schritte:
a. Bereitstellen von einem Bolzen, Platin und / oder Palladium umfassend,
b. Bereitstellen von einem Rohr oder mehreren Rohren, Platin und Rhodium umfassend, wobei der Innendurchmesser des dünnsten Rohres so gewählt ist, dass das dünnste Rohr bündig über den Bolzens geschoben werden kann, sowie die Durchmesser der weiteren Rohre so gewählt sind, dass sie bündig übereinander geschoben werden können und das äußerste Rohr eine geringere Rhodiumkonzentration aufweist als der darunter angeordnete Mantel oder Kern
c. Übereinanderschieben der Rohre und des Bolzens, beginnend mit dem Schieben des dünnsten Rohres über den Bolzen, wonach die Rohre nacheinander mit steigendem Durchmesser aufgeschoben werden, und Verbinden des Bolzens mit dem Rohr oder den Rohren, zum Beispiel auf dem Rohrzug, wodurch ein Rohling entsteht
d. Glühen und anschließendes kaltes Walzen des Rohlings, dieser Schritt kann mehrmals wiederholt werden
e. Drahtziehen des Rohlings bis zur gewünschten Drahtstärke
f. Stricken des Katalysatornetzes aus dem Draht

10. Verfahren entsprechend Anspruch 9, **dadurch gekennzeichnet, dass** das Verbinden des Bolzens (Verfahrensschritt b) mit dem Rohr oder den Rohren durch einen Rohrzug geschieht.

11. Verfahren zur Oxidation von Ammoniak, **dadurch gekennzeichnet, dass** die Oxidation katalysiert wird durch mindestens ein Katalysatornetz entsprechend einem oder mehreren der Ansprüche 7 bis 8.
